Europäisches Patentamt

European Patent Office

Office européen des brevets

(11) Publication number: **0 294 141**
**A1**

# EUROPEAN PATENT APPLICATION

(21) Application number: 88304925.6

(22) Date of filing: 31.05.88

(51) Int. Cl.⁴: **C08J 3/12 , C08J 7/04 ,
B05D 5/08**

(30) Priority: 05.06.87 GB 8713268

(43) Date of publication of application:
07.12.88 Bulletin 88/49

(84) Designated Contracting States:
**AT BE CH ES FR GB IT LI SE**

(71) Applicant: **DU PONT CANADA INC.**
**Box 2200 Streetsville Postal Station
Mississauga Ontario L5M 2H3(CA)**

(72) Inventor: **Chu, Kenneth Chou
50 Quebec Street
Kingston Ontario, K7K 1T7(CA)**
Inventor: **Kershaw, Bernard John
796 Ashley Crescent
Kingston Ontario, K7M 4E3(CA)**

(74) Representative: **Calderbank, Thomas Roger et
al
MEWBURN ELLIS & CO. 2/3 Cursitor Street
London EC4A 1BQ(GB)**

(54) **Coated synthetic polymer pellets.**

(57) A pelleted synthetic polymeric composition is disclosed, which comprises pellets of a blend of a first polymer optionally containing at least one additive, melt-coated with a second polymer. A process for making the composition is also disclosed wherein the molten pellets of the first polymer are dusted with powdered second polymer, thus permitting the dusted powder to melt and coat the pellets.

EP 0 294 141 A1

## COATED SYNTHETIC POLYMER PELLETS

The present invention relates to synthetic polymers which are difficult to handle, as solids. The invention is particulary useful for these polymers which are, for example, sticky, and for polymers which contain additives which make the polymer, for example, sticky, corrosive, hydrophilic.

The term "first synthetic polymer" as used herein, and sometimes referred to as "first polymer" encompasses those synthetic thermoplastic and elastomeric polymers capable of extrusion in the molten state, in strand form, through extrusion dies and are settable by a cooling medium after issuance from the dies. Suitable thermoplastic polymers include polyamides, polyesters and polyolefins. Suitable elastomeric polymers include styrene-butadiene, polybutadiene, neoprene and ethylene-propylene rubbers.

The term "second synthetic polymer" as used herein, and sometimes referred to as "second polymer" encompasses those synthetic thermoplastic polymers capable of melting under atmospheric pressure, are settable by cooling and permit pellets of first polymer coated therewith to flow easily and be without objectionable surface characteristics. Objectionable surface characteristics would include stickiness, oiliness, corrosiveness and the like. Suitable thermoplastic polymers include polyamides, polyesters and polyolefins.

The term "polyolefin" as used herein encompasses normally solid polymers of at least one hydrocarbon alpha-olefin having 2-10 carbon atoms. Such polymers may be homopolymers or copolymers. Examples of such polyolefins include homopolymers of ethylene, propylene and 4-methyl pentene-1, copolymers of ethylene and/or propylene with at least one of butene-1, hexene-1, 4-methyl pentene-1 and octene-1, copolymers of ethylene and vinyl acetate. As will be apparent to these skilled in the art, some polyolefins are thermoplastic and others are elastomeric. For example, many ethylene-propylene terpolymers are elastomeric.

The term "polyethylene" as used herein encompasses so-called high pressure polyethylenes and linear polyethylenes.

The term "polyamide" as used herein encompasses normally solid long-chain synthetic polyamides which have recurring -CONH- groups in the main polymer chain. Examples of such polyamides include, nylon 6, nylon 66, nylon 610, nylon 612, nylon 9 and nylon 11.

The term "polyester" as used herein encompasses normally solid polymers produced by the reaction of dibasic acids and dihydric alcohols. Examples of such polymers include the reaction products of saturated acids e.g. phthalic acid, isophthalic acid, terephthalic acid, adipic acid and azelaic acid, and of glycols, e.g. ethylene glycol, propylene glycol, diethylene glycol and dipropylene glycol. Thermoplastic polyesters are amorphous or partially crystalline, as is known in the art.

Both first and second polymers may contain additives, some of which are added for heat and light stability and the like. The first polymer, advantageously, may contain relatively high concentrations of "objectionable" additives, e.g. those that would make the polymer oily, sticky, hygroscopic and the like.

The present invention is particularly useful with respect to so-called concentrates, often known as masterbatches. Such concentrates comprise a polymer which contains relatively high concentrations of additives. A concentrate of 30-40 wt % polyisobutylene in polyethylene, for example, may be made by melt-blending, extruding and pelletizing. Such a concentrate is useful for blending with another polyethylene and extruding the blend into film form so that the resulting film, which has stretch-cling properties, contains from about 2 to 5 wt % polyisobutylene.

Accordingly the present invention provides a first synthetic polymer in pellet form, coated with a second synthetic polymer.

The present invention also provides a process for making pelleted synthetic polymeric compositons comprising:

a) extruding a first synthetic polymer above its melting temperature to produce strands;

b) cutting said strands, while still molten, to form pellets;

c) immediately dusting said pellets with a second synthetic polymer in powdered form, the temperature at which the first polymer is extruded being sufficient to provide heat sufficient to melt said second polymer and to form a coating of said second polymer on the pellets; and

d) cooling the coated pellets.

In one embodiment, the first synthetic polymer is one which normally has physical or chemical properties which make it difficult to handle or process. For example, some butene polymers, ethylene-vinyl acetate copolymers and ethylene-propylene terpolymers are sticky. In pellet form such polymers are difficult to convey in pneumatic conveying equipment and difficult to gravity feed into extruders. As another example, many nylon polymers are hygroscopic and any absorbed moisture causes processing problems

2

during extrusion of such polymers. For such first synthetic polymers, the second synthetic polymer serves to provide a coating which overcomes the shortcomings of the first polymer. For instance, in the case of the aforementioned sticky polymers, the second polymer may well be a linear low density polyethylene which would enable the pellets to be free flowing.

In another embodiment, the first synthetic polymer is one which contains one or more additives which impart physical or chemical properties to the polymer, which makes the additive-containing polymer difficult to handle or process. For example, polyethylene pellets which contain above about 35 wt % of polyisobutylenes, which have a molecular weight of from 920-2300 as measured using a vapour phase osmometer, tend to be oily or sticky and are difficult to handle and process. As another example, polyethylene containing about 65-70 wt % of alumina trihydrate tends to be very porous, thus allowing absorption of water if the pellets are quenched in a water bath. Again, melt-coating of such additive-containing first polymers with a second synthetic polymer may overcome the shortcomings of such first polymers.

Specific embodiments of the present invention include:

    i) nylon extruded and coated with a polyethylene;

    ii) ethylene-vinyl acetate copolymer with high vinyl acetate content extruded and coated with a polyethylene;

    iii) ethylene-propylene norbornene terpolymer extruded and coated with polyethylene;

    iv) polyethylene containing up to 80 wt % of a mineral filler, e.g. mica, calcium carbonate, magnesium hydroxide, alumina trihydrate, coated with a polyethylene; and

    v) polyethylene containing organic modifying agents e.g. polyisobutylenes, polyalkylene glycols, ethoxylated tertiary amines, salts of carboxylic acids, coated with a polyethylene.

It has been found that it is not necessary that the first and second polymers be compatible in order that the second polymer coat the first polymer. The important aspect is that the extrusion temperature be somewhat higher than the melting temperature of the second polymer.

The various aspects of the invention are now described, with particular emphasis on concentrates of polyisobutylene in a polyethylene base, as first polymer.

In the case of the additive-containing first polymers, the additive may be added during extrusion or preblended with the first polymer and then extruded, as is known in the art. In the case of the polymers containing essentially no additives, such polymers are merely extruded. The first polymer is extruded in strand form and cut to form pellets. The pellets may then be dropped into a bed of second polymer powder, for example, polyolefin powder. Preferably, however, the strands are cut using a hot die face cutter or a water ring pelletizing die, and the pellets so formed are flung outwards away from the die. The pellets, so flung, encounter a stream of the powder. The temperature of the strand is kept sufficiently high that the pellets, when contacted by powder, have sufficient heat to melt the powder particles onto the outside of the pellets and thus form a coating on the pellets. To a certain extent, the melting of the powder quenches the molten pellets of first polymer and helps solidify the pellets. Further coating with powder, water or air cooling, will cool the coated pellets so that the coating, too, solidifies. It has been found that with judiciously chosen second polymers, when sufficiently cooled, adjacent pellets do not stick to one another.

With polyethylene powders, it is preferred that the melt index of the polyethylene, as determined by the method of ASTM-1238 be from about 0.5 to about 30 dg/min. At any given extrusion temperature, the higher melt index powders coat more easily onto the extruded pellets and tend to give thicker, more even coatings.

It has also been found that when the powder is warm, the coating thickness is thicker than when the powder is cool.

A particularly preferred process is now described with respect to a masterbatch of polyisobutylene in polyethylene. Such masterbatch is useful for the manufacture of stretch-cling films in which the masterbatch is blended with polyethylene and the blend is extruded into film form. Masterbatch formed from melt blending polyisobutylene and polyethylene, extruding and pelletizing the blend by prior art processes is generally unsatisfactory because the polyisobutylene exudes to the surface of the pellets, causing the pellets to be sticky. It has now been found that as much as up to about 50 wt % polyisobutylene may be melt blended with polyethylene. Above this concentration there is a tendency of the strand to be smeared at the die, upon cutting with a die face cutter, thus causing the strands to have tails thereon. Smearing may also be a problem with low viscosity polyethylene, e.g. having melt indices greater than 100 dg/min. In general, however, the polyethylenes used in masterbatches useful for film manufacture have melt indices of, for example, 0.5 to 5 dg/min.

The problem of exudation, referred to above, may be overcome using the process of the present invention, i.e. by coating the pellets with a thin layer of a material which is a barrier to exudation of the polyisobutylene, e.g. a thin layer of polyethylene. In essence, the strands of polyisobutylene/polyethylene blend are caused to be "dusted" with powder, after being extruded at such a temperature that the powder melts and adheres to the surface of the pellets, thus forming the coating. Although 60-135 Tyler (trade mark) mesh size polyethylene powder is preferred, 30-35 mesh size may also be used.

The pellets may be coated continuously by flinging the molten pellets into an annular stream of polyethylene powder. It is preferred that there be a slight vacuum surrounding the die face, to prevent powder from impinging into the die face. The coated pellets and any excess powder may then be transferred, using an eductor, to a cyclone separator with an air lock feeder at the exit to the separator. The coated pellets and excess powder are then separated on a screen of appropriate size. The excess powder is recirculated. The pellets, which are still hot even though the coating is solid, are dropped into a water bath to cool the pellets. The rate of powder feed is generally 2 to 5 times the weight of the rate of strand casting, and has been found suitable for coating the pellets with about 5-30 % of the final weight with the powder. It has been found, too, that if the powder is warm, e.g. 30-40°C, the coating is more uniform. The coating thickness may be varied from about 25 to 250 μm. For linear low density polyethylene as the extruded polyolefin base, it has been found that 175-200°C is a good range for the process of the present invention. At extrusion temperatures less than about 145°C the pellet may not be coated adequately.

The invention is illustrated by the following Examples.

## EXAMPLE 1

The apparatus used comprised a Berstorff (trade mark) 40 mm, twin-screw, seven-segment extruder with an adapter and strand extrusion die attached. The strand extrusion die had thirteen 3.175 mm diameter extrusion holes. The direction of extrusion was downwards. The extrusion die had associated therewith a Berstorff (trademark) single blade die cutter, the blade of which rotated at 1260 r/min. Surrounding and below the die was a conical shroud of circular cross-section. The shroud was 52.1 cm in diameter adjacent the die had sides, parallel to its longitudinal axis, for 15.2 cm, below which the shroud tapered to a diameter of 5.1 cm. The shroud had a 5.1 x 10.2 cm rectangular inlet pipe tangential to the parallel-side section. The shroud tapered over a length of 66.0 cm and had a 5.1 cm diameter discharge pipe at its lower end.

The discharge pipe was connected via an eductor to a cyclone separator, about 10 m away. The cyclone separator had a rotary air lock feeder at its outlet, and below the rotary air lock feeder was a vibrating mesh sieve. A water bath was situated so that hot pellets could be cooled therein.

Sclair 1311E (trade mark) linear polyethylene resin pellets were fed into the first segment of the extruder and Indopol H-1500 (trade mark) polyisobutylene was fed into the second segment of the extruder, at rates of 40 kg/h and 23.9 kg/h respectively. The temperature settings, in °C for the extruder segments, adapter and die follow, with measured temperatures in parentheses:

160(155), 180(175), 200(192), 200(194), 200(197), 200(197), 200(205), 200(200) and 180(180),

respectively. Strands of the polyethylene and polyisobutylene blend were extruded and cut into pellets. The cutter flung the pellets towards the periphery of the conical shroud. Sclair 1311E linear polyethylene resin powder (nominally 30 Tyler mesh) was blown tangentially into the conical shroud at a rate of about 149 kg/h.

The pellets became dusted with the powder and were removed from the bottom of the conical shroud, through the eductor and to the cyclone separator by air. The flow of air was sufficient to pull a slight vacuum within the shroud. The coated pellets were separated from excess powder and the powder recirculated. The coated pellets were cooled in a water bath and then collected. An analysis of the polyisobutylene content of the coated pellets i.e. 34.1%, indicated that about 8.7% of the weight of the pellet could be attributed to the coating. The coated pellets were sufficiently free flowing to be air conveyable.

## EXAMPLES 2-7

Several experiments, similar to that of Example 1, were performed using the same equipment. The following were the conditions of such experiments:

| Extruder temp. | Ex.2 | Ex.3 | Ex.4 | Ex.5 | Ex.6 | Ex.7 |
|---|---|---|---|---|---|---|
| **Set point (°C)** | | | | | | |
| Segment 1 | 160 | 160 | 160 | 170 | 145 | 160 |
| Segment 2 | 180 | 200 | 175 | 190 | 145 | 235 |
| Segment 3 | 200 | 200 | 175 | 200 | 145 | 235 |
| Segment 4 | 200 | 200 | 175 | 200 | 145 | 235 |
| Segment 5 | 200 | 200 | 175 | 200 | 145 | 235 |
| Segment 6 | 200 | 200 | 175 | 200 | 145 | 235 |
| Segment 7 | 200 | 200 | 175 | 200 | 145 | 235 |
| Adapter | 200 | 200 | 175 | 210 | 145 | 235 |
| Die | 180 | 180 | 160 | 200 | 150 | 235 |

| | Ex.2 | Ex.3 | Ex.4 | Ex.5 | Ex.6 | Ex.7 |
|---|---|---|---|---|---|---|
| Feed Resin Type* | A | A | A | A | A | A |
| Feed Resin Rate (kg/h) | 20.0 | 20.0 | 20.0 | 20.0 | 20.0 | 20.0 |
| PIB** Rate (kg/h) | 11.45 | 11.45 | 11.45 | 11.45 | 11.45 | 12.41 |
| Dusting Resin Type* | B | C | C | C | C | A |
| Dusting Resin mesh | 30 | 135 | 135 | 80 | 80 | 35 |
| Dusting Resin Rate (kg/h) | 149 | 149 | 149 | 149 | 149 | 149 |
| Dusting Resin Temp (°C) | 40 | 36 | 36 | 35 | 35 | 32 |
| Wt.% PIB in extruder | 36.4 | 36.4 | 36.4 | 36.4 | 36.4 | 38.3 |
| Wt.% PIB in final product | 31.2 | 32.8 | 34.0 | 36.4 | 36.4 | *** |

|   |   |   |   |
|---|---|---|---|
| * | A = | | Sclair 1311E linear polyethylene resin, having a density of 0.920 g/cm3 and a melt index of 1.35 dg/min |
| | B = | | CIL 472 (trade mark) polyethylene, having a density of 0.920 g/cm3 and a melt index of 5 dg/min |
| | C = | | Sclair 8107 linear polyethylene resin, having a density of 0.924 g/cm3 and a melt index of 5.1 dg/min Density is determined by the procedure of ASTM D-1505. |
| ** | PIB = | | Indopol H-1500 polyisobutylene. |
| *** | | | Thick skin on product; clumping of pellets occurred. |

In examples 2-4 the feed resin was in 35 mesh powder form; in the other Examples the feed resin was in pellet form.

Example 2 was judged "very good" in terms of lack of tackiness. However the dusting powder did not quench the pellets sufficiently and there was a tendency for the excess powder to agglomerate, which prevented recirculation of some of the powder.

Examples 3, 5 and 7 were judged "very good" in terms of lack of tackiness.

Example 4 was judged "good" as there was slight tackiness caused by a few uncoated or partially coated pellets. The coating thickness was about half that of Example 3 due primarily to the lower extrusion temperature of the feed resin/polyisobutylene blend.

Example 6 was judged to be "adequate" in terms of lack of tackiness because of a number of uncoated or partially coated pellets, caused by the low extrusion temperature.

In Example 7, although the results were judged to be "very good" in terms of lack of tackiness, due to the thick coating on the pellets, there was considerable clumping of pellets. Such clumping was caused by the high temperature of extrusion.

From the foregoing Examples it may be concluded that with Sclair 1311E polyethylene feed resin and Indopol H-1500 polyisobutylene, best coating of the pellets occurs when the extrusion temperature is about 200° and other operating conditions are sufficient to give a coating weight of at least about 10% of the coated pellet.

## Claims

1. A process for making pelleted synthetic polymeric compositions comprising:
   a) extruding a first synthetic polymer above its melting temperature to produce strands or pellets;
   b) cutting said strands, while still molten, to form pellets;
   c) immediately dusting said pellets with a second synthetic polymer in powdered form, the temperature at which the first polymer is extruded being sufficient to provide heat sufficient to melt said second polymer and to form a coating of said second polymer on the pellets; and
   d) cooling the coated pellets.

2. A process of Claim 1 wherein the first and second polyolefins are selected from homopolymers of ethylene, copolymers of ethylene and at least one $C_4$ to $C_{10}$ alpha-olefin or copolymers of ethylene and vinyl acetate.

3. A process of Claim 1 wherein the first and second polymers are the same.

4. A process of Claim 2 wherein the first and second polymers are the same.

5. A process of any one of Claim 1 to 4 wherein the first polymer contains an additive selected from polyisobutylenes, polyalkylene glycols, ethoxylated tertiary amines and salts of carboxylic acids, mica, calcium carbonate, magnesium hydroxide and alumina trihydrate.

6. A pelleted polymeric composition comprising pellets of a first synthetic polymer, coated with a second synthetic polymer.

7. A composition of Claim 6 wherein the first and second polymers are selected from homopolymers of ethylene, copolymers of ethylene and at least one $C_4$ to $C_{10}$ alpha-olefin or copolymers of ethylene and vinyl acetate.

8. A composition of Claim 6 or 7 wherein the first polymer contains an additive selected from polyisobutylenes, polyalkylene glycols, ethoxylated tertiary amines and salts of carboxylic acids, mica, calcium carbonate, magnesium hydroxide and alumina trihydrate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 322 623 (ESSO RESEARCH & ENGINEERING CO.) * Claims 1-12; page 2, lines 6-25,66-101; examples 2-5 * | 1,2,6,7 | C 08 J 3/12 C 08 J 7/04 B 05 D 5/08 |
| Y | | 1-8 | |
| Y | GB-A-1 378 222 (E.I. DU PONT DE NEMOURS) * Claims 1-4,10,11,15; page 1, line 51 - page 2, line 9 * | 1-4,6,7 | |
| Y | DE-A-2 435 410 (BOSTIK) * Whole document * | 1-8 | |
| A | US-A-3 404 124 (J.N. SCOTT Jr. et al.) * Claim 1; column 3, lines 20-31 * | 1,5,6,8 | |
| A | DE-A-3 002 753 (M. NICOLAUS KUNSTSTOFF-FARBEN) * Claims 1,2; page 5, paragraph 3 * | 1,5,6,8 | |

TECHNICAL FIELDS SEARCHED (Int. Cl.4)

C 08 J
B 05 D

The present search report has been drawn up for all claims

| Place of search | Date of completion of the search | Examiner |
|---|---|---|
| THE HAGUE | 21-09-1988 | HALLEMEESCH A.D. |